Europäisches Patentamt

European Patent Office

Office européen des brevets

(19)

(11) Publication number: **0 042 967**

**B1**

(12)

# EUROPEAN PATENT SPECIFICATION

(45) Date of publication of patent specification: **14.05.86**

(51) Int. Cl.⁴: **G 06 F 15/06**

(21) Application number: **81103820.7**

(22) Date of filing: **19.05.81**

(54) **Mutiple data flow component system.**

(30) Priority: **30.06.80 US 164738**

(43) Date of publication of application:
**06.01.82 Bulletin 82/01**

(45) Publication of the grant of the patent:
**14.05.86 Bulletin 86/20**

(84) Designated Contracting States:
**DE FR GB IT**

(56) References cited:
**US-A-3 988 717**

**WESCON CONFERENCE RECORD, 19-21
September 1977, San Francisco, US,
COLEMAN et al. "The next generation for-bit
bipolar microprocessor slice-The AM 2903",
pages 16/4, 1-19**

(73) Proprietor: **International Business Machines
Corporation
Old Orchard Road
Armonk, N.Y. 10504 (US)**

(72) Inventor: **Doyle, Donald Egbert
202 North Swinton Avenue
Delray Beach Florida 33444 (US)**
Inventor: **Helwarth, George Arlen
1102 S.E. 10th Terrace
Deerfield Beach Florida 33441 (US)**
Inventor: **Quanstrom, Jack Leo
1384 S.W. 12th Street
Boca Raton Florida 33432 (US)**

(74) Representative: **Bonneau, Gérard
Compagnie IBM France Département de
Propriété Industrielle
F-06610 La Gaude (FR)**

Courier Press, Leamington Spa, England.

## Description

Technical field

The invention relates to a data flow component and to its utilization in processor and microprocessor systems, the component serving as a basic building block in a large-scale integration (LSI) environment.

Relevant background art

Present state of the art systems may utilize general purpose chips that can be used for more than one computer function. For example, an Arithmetic-Logic (ALU) function and a control unit function are examples of computer functions that may be implemented by the identical general purpose chip. As chip circuit densities increase, more circuits and hence more functions may be provided on each chip. More functions are achieved merely by generating the various masks used in processing the chip, and additional materials, per se, are ordinarily not needed. A pratical constraint is the number of terminals that can be physically placed on a chip. A compromise, therefore, results between available input/output control terminals, the complexity of the function and the number of terminals required to support a given level of complexity.

A similar problem was faced earlier in the integrated circuit art and resulted in a circuit packing approach for Central Processing Unit (CPU) functions referred to in the art as "bit slicing". The concept of "bit slicing" involves employing a number of identical chips, each of which can typically perform ALU functions on two multiple-bit inputs, the chips operating in parallel to handle operands of, for example, 16 bits. Each of these chips include "mode control terminals" which function to establish and control the assignment of each chip to preselected slice of the multislice word or words being processed.

Many of the second level components employed to implement the ALU function on a bit-slice basis such as registers and multiplexers, are also employed in the implementation of functions other than ALU functions that are necessary to CPU operations. Thus, additional CPU functions which are separate and distinct from the ALU functions and related control lines may be added to a chip that has been designed to implement an ALU function on a bit-slice basis for assigning the individual chips to pre-assigned bit positions of a multi-bit ALU function or to non-ALU functions. An example of such a non-ALU function is the control, i.e., addressing of a microcode memory.

ALU and non-ALU functions implemented on a byte-slice basis are described in US—A—3 988 717. This patent discloses a general purpose chip or slice that can be used both as a data flow component in a computer, including the control and arithmetic units and as a component of the microcode control section. A number of chips of this single type of chip are employed in the implementation of a large class of computers and other data processing systems, employing input/output functions, memory process functions, as well as arithmetic and central processing unit functions. Mode code terminals are secured to the chips. They are selectively activated by binary mode code signals to control each different chips to handle the most significant byte, the least significant byte, or a byte of intermediate significance in the digital number being processed, or to control the selected chip to operate independent of the other chips in the system, the selected chip being not part of a group of chips handling multi-byte numbers.

Disclosure of the invention and advantageous effects of the invention

The present invention incorporates a high functional capability and a high degree of application flexibility in an 8-bit "byte-slice" that can be used not only to provide data flow functions for a microprocessor or a simple controller, but serving also as efficient data flow components in the structure of sophisticated large-scale systems with data widths up to and possibility exceeding 64 bits.

A multiple data flow component system according to the invention comprises a processor control unit for processing microinstructions and generating instruction signals on an instruction bus, a data bus for the transfer of data, a control memory to supply the microinstructions to the processor control unit and a plurality of data flow components which can be in stand alone, active or non-active state.

Each component comprises an arithmetic and logic unit for performing arithmetic operations, a pair of operand registers, slice function control lines for determining the state of the component and in particular its stand-alone, active or non-active state, a test and control logic unit connected to the slice function control lines for providing control and test signals pertaining to the data flow component, a carry bypass bus controlled by the test and control logic for providing direct path for carries between a low end and a high end of a bidirectional carry bus when data flow component is in nonactive state as determined by the slice function control lines and controlled by the test and control logic unit, and an instruction register connected to the test and control logic unit and to the instruction bus for receiving the current instruction code of said instruction is decoded to determine, in conjunction with the information provided by said function control lines, the state of the data flow component, the contents of the instruction being executed by the component if it is in active state, and the decode operation code supplying the necessary shift direction information for controlling the test and control logic unit in order to propagate carries in either direction between active adjacent components if the component is in non-active state.

The preferred embodiment described herein utilizes an 8-bit component referred to as a "byte-slice" but other basic component sizes can be utilized instead of the "byte-size". Thus, it is entirely feasible to make use of a "nibble", i.e., 4-bit, two bytes, i.e., 16 bits, or other desired bit-size configuration. Provision is made for the connection of two or more chips to handle operands exceeding the data flow with of a single chip; in order words combining of slices to form wider data paths, and provision of interconnections to handle carries between chips.

The "byte-slice" data flow component features are: (1) dependence of required functional characterizations on slice position, i.e., the behavior of the slice logic depends on whether it is in the most significant, least significant or an intermediate position, or is being used as a stand-alone; (2) efficient mechanism for handling arithmetic and shift carries between slices, permitting non-contiguous slices to be linked as easily as contiguous slices, without special external switching circuits, such that slices can be selectively inactivated under external control to alter the effective data path in such a way as to include any desired combination of slices in the effective data path; (3) efficient mechanism for handling multi-bit shifting, in either direction, of 1 to 8 bits in single cycle, as implemented by what is known as a barrel shifter; and (4) efficient interslice communications such as required when the action of a given slice depends on conditions originating in another slice.

The following more particular description of a preferred embodiment of the invention is illustrated in the accompanying drawings.

Brief description of the drawings

Figure 1 is a data flow diagram of the data flow component, the dotted lines being major control line paths.

Figure 2A shows utilization of the data flow component on a stand-alone basis in a microprocessor or controller system.

Figure 2B shows the data flow component in use in a microprogrammable control unit for a high-performance central processing unit (CPU).

Figure 3 illustrates features of the data flow component that enable its efficient and flexible utilization in multiple-slice structures.

Detailed description of byte-slice data flow component and its use in various systems

The high-function data flow component used in the system of the present invention is designed for use a large-scale integration (LSI) building block in processor and microprocessor systems. It is characterized by (1) byte-slice structure, (2) slice-function control (3) carry signal control for selective slice operations, and (4) an interslice control scheme.

LSI technology allows fewer parts, with different part numbers, to be manufactured and carried in stock with resultant economic benefits. However, two criteria limit the reduction of part numbers, i.e., the upper limit of logic complexity permitted by current LSI technology, such as number of gates per chip, and the reduction in flexibility or performance that may result from increasing functional complexity.

These limitations are eliminated by a building-block design of a single part-number, high-function data flow component that can be used singly or in a combination of identical part-number components to provide data flow paths and functions of different data widths to meet the needs of a large variety of different LSI processor or microprocessor applications with a wide range of system complexity. Components similar to this have been marketed as "bit-slice" microprocessor architectures. Heretofore the structure of these components have been limited to reduce slice widths with relatively simple functional characteristics.

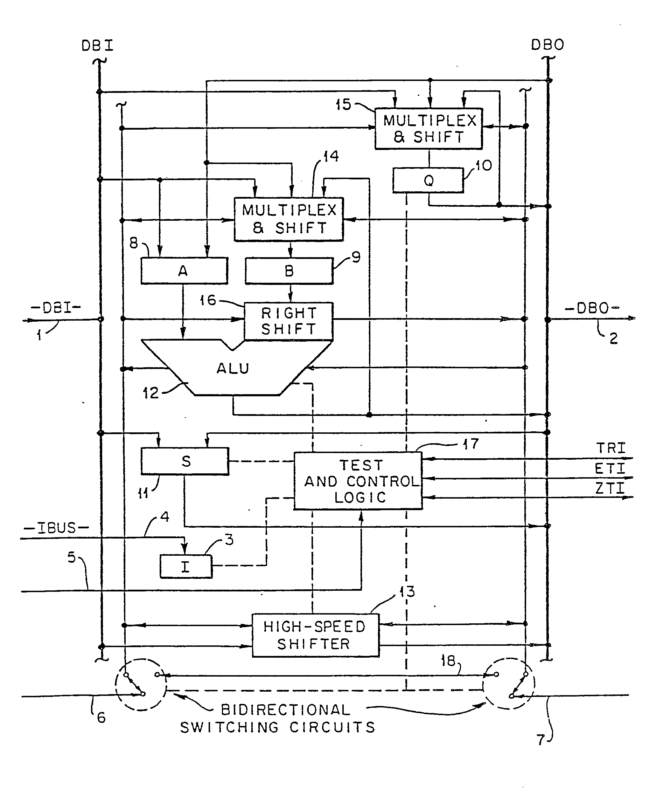

Figure 1 is a data flow diagram of the data flow component with the dotted lines being major control line paths. It includes the following elements:

Data Bus In 1 (DBI), 8-bits wide

Data Bus Out 2 (DBO), 8-bits wide

Instruction I register 3

Instruction bus (I bus) 4, 10 bits

Slice Function Control 5 (encoded control lines that determine status of a slice: Active, Nonactive, etc.)

Bidirectional carry bus 6, high end, 8 bits

Bidirectional carry bus 7, low end, 8 bits

Operand registers A and B designated 8 and 9, 8 bits each.

Q register 10, 8 bits (Operand B extension for multiply, divide and extended shift instructions)

Status (S) register 11, 8 bits

Arithmetic-Logic Unit (ALU) 12 with B-operand preshifter

High speed shifter 13 (8-bit combinatorial barrel shifter with associated registers and control logic, the barrel shifter through selective gating providing a single or multiple shift capability in a single timing interval. A high-speed shifter that is suitable for this function is described in the article entitled "High-Speed Combinatorial Logic Bit Shifter" by K. K. Doty and J. L. Quanstrom and appeared in the IBM Technical Disclosure Bulletin February 1976 at pages 2753-2754).

Test and control logic 17 (Acts on instructions, provides control and test signals pertaining to the data flow component).

Carry bypass bus 18 (Provides path for carries between external adjacent slices when represented slice is in nonactive byte mode).

These elements and the operations they perform are presented as being representative of a "byte-slice" configuration for a data flow component in accordance with the present invention.

The functions provided by the data flow component are the following:

All basic ALU functions (OR, AND, XOR, addition, subtraction, etc.)

Divide step (Each instruction cycle executes one step of a non-restoring division algorithm).

Multiply step (Each instruction cycle executes a step of a modified Booth's algorithm requiring one step for each two bits of the multiplier).

Standard shift functions (right, left, logical, arithmetic, and circular, from one to eight bits per instruction cycle using the high-speed combinatorial shifter).

Extended shift operations on the contents of B and Q (right or left, logical or arithmetic). Multiplex and shift networks 14 and 15 for the B and Q registers provide right and left shifts; the right shift network 16 for the ALU provides right shift only. Right shifts of the B and Q registers can be either a single-bit or a double-bit shift.

Single-bit data and status testing

Comparison testing (equal, greater than, less than; both magnitude and algebraic comparison)

Programmable logic gate functions (data flow slices are controlled to perform as a single AND, OR, NAND, or NOR gate with program selectable inputs. Combinatorial logic elements and function of this nature are described in the article entitled "Programmable Logic Element Processor" by J. L. Quanstrom that appeared in the IBM Technical Disclosure Bulletin of March 1979 at pages 3916—3918).

Conversion to absolute value, one's complement, or two's complement

Increment and decrement with test for zero.

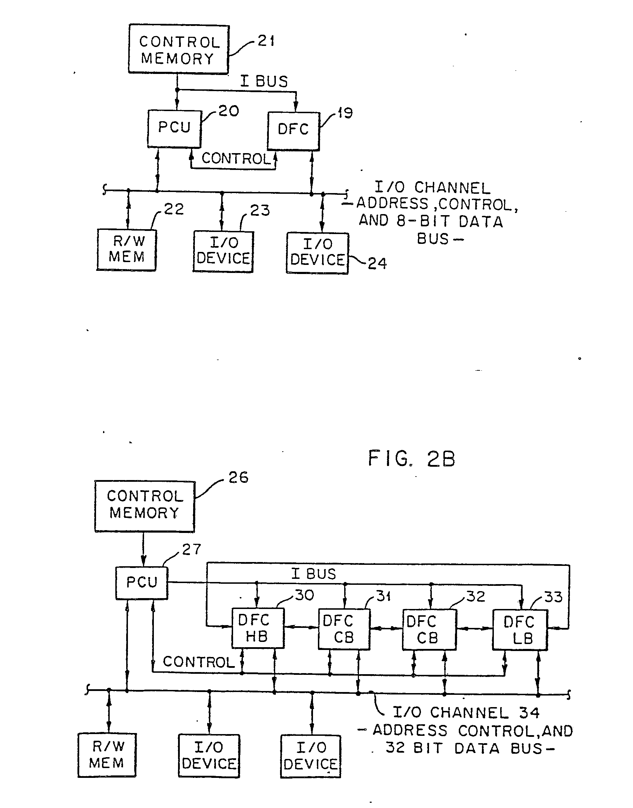

Possible configurations using the data flow component (DFC) are illustrated in figures 2A and 2B. Figure 2A illustrates stand-alone use of the data flow component 19 in a microprocessor or controller system, including a processor control unit (PCU) 20 receiving microinstructions from a control memory 21 and having a read/write (R/W) memory 22 as well. The input/output (I/O) devices 23 and 24 represent the interfaces to a master computer and one or more peripheral devices. Figure 2B represents a microprogrammable control unit used in the design of a high-performance central processing unit (CPU), wherein control memory 26 is the source of microinstructions that control a sophisticated processor control unit (PCU) 27 which in turn generates or routes commands to a set of four data flow components 30—33, each of which operates on a separate part of a 32-bit data channel 34.

The two systems differ primarily in data path width and in complexity and sophistication of the processor control unit logic and control programming. A wide variety of systems can be designed by combining special-purpose PCU designs with different sized sets of data flow components. This helps to overcome the LSI limitations noted earlier by achieving a good compromise between the flexibility of a special-purpose design (processor control and control program) and the economies of using general-purpose wide-use data flow components. This solves a major problem in the use of currently available microprocessors, which tend to be restrictive in their range of potential applications as a result of fixed limits imposed by technology on such factors as processor performance and data widths.

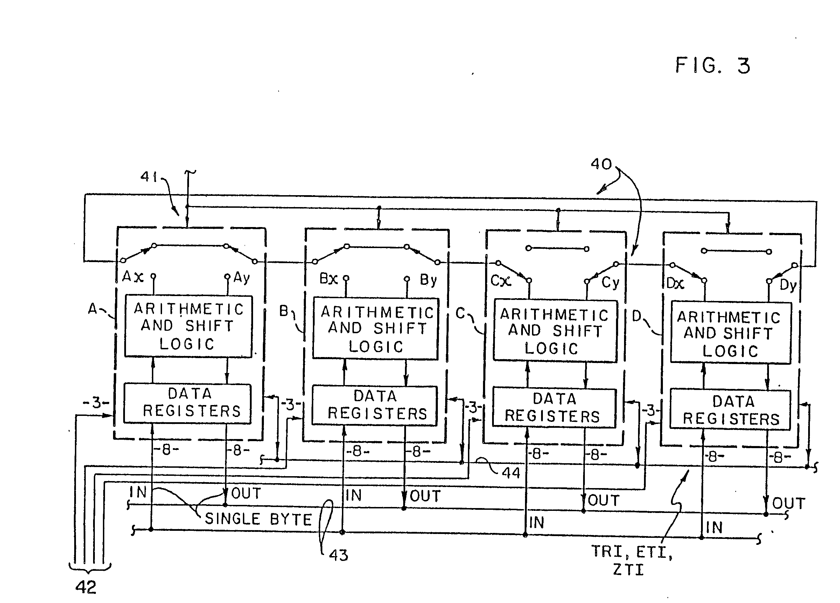

Figure 3 illustrates, in more detailed fashion, features of the data flow component design that permit efficient and flexible use in multiple-slice structures. Each of the four data flow component slices is identified by a letter A—D from left to right, and each slice includes data registers and arithmetic and shift logic, the latter having carry inputs (x) and carry outputs (y). Significant control lines and buses are defined as follows:

1. Bidirectional Carry Bus 40—Includes all lines, both unidirectional and bidirectional, used to transfer shift and arithmetic carry information.

2. Instruction Bus 41—Supplies an encoded instruction or command simultaneously to all slices.

3. Slice Function Control 42—A separate set of encoded control lines to each slice determines the behavior of a slice as one of the following:

NAB—Nonactive Byte
LB—Lowest Active Byte (least significant)
HB—Highest Active Byte (most significant)
CB—Central Active Byte (between Lowest Active Byte and Highest Active Byte, any position)
SAB—Stand-Alone Byte

The specification of these five distinct behaviors requires three lines per slice.

4. Data Buses 43—Each slice serves a corresponding eight bits of each data bus. The number of slices determines the total width of the bus.

5. Interslice Control Bus 44—Provides necessary communication between slices for control and is also used to convey result information from individual slices to the processor control unit. Each line acts as a wired-OR connection between slices such that it can be activated by any slice, and its state can be sensed by any slice or by the PCU. The bus consists of a small number of lines that are shared by different functions, depending on the instruction being executed. In the embodiment of figure 1, it is limited to three lines identified as follows:

TRI—Test Result Indicator
ETI—Even Test Indicator
ZTI—Zero Test Indicator

The names of these lines are indicative of particular individual functions for which they are used in the majority of the cases. However, they are also used as a group to convey encoded control information, as well as separately to transmit other special control signals unrelated to the named functions.

To illustrate the main characteristics or features of data flow component operations, a four-slice configuration, such as represented by figures 2B and 3, will be assumed. By varying the Slice Function Control signals, which may be done by the processor control unit in response to special micro-instructions from control storage, a variety of operation modes are possible, for example:

1. Combined operations of all four slices. Slice A is controlled to function as the Highest Active Byte, slice B and C as Central Active Byte slices, and slice D as Lowest Active Byte slice. This combination performs operations on 32-bit operands and supplies 32-bit results to the output data bus, which can be gated to either an internal register (A, B, Q or S) or to an external destination.

2. Stand-Alone operation of any selected slice. The selected slice operates on a single byte in the same fashion as a data flow element of an 8-bit processor, being totally independent of the state of any other slice. External carry, control, and status signal lines from other slices are ignored.

3. Any substrat of the four slices can be operated as a combination. For example, slice A can be selected as the Highest Active Byte, slice B as the Central Active Byte, slice (C) as the Lowest Active Byte and slice D as a Nonactive Byte to produce the effect of a 24-bit processor acting on the three highest order bytes. In fact, any of ten different combinations are allowed (all combinations of two out of four and three out of four).

The NAB feature in conjunction with multiple-bit and full-byte shifting and the full range of ALU capabilities for individual bytes, or arbitrary combinations of bytes, provides a degree of flexibility and efficiency in data processing and manipulation, that is not found in existing computer systems. This is particularly true of processors organized to handle 32-bit or larger operands that may also need to operate on and provide efficient storage packing for bytes or smaller groups of bits, such as may be the case with floating point operations, or for efficient compiler and interpreter types of operations.

The NAB feature can have the following uses in a multi-slice configuration:

(1) Concatenation or packing of separate fields in a large word so that they can be interpreted as a logical displacement; for example, where operation codes and modifiers are located in separate bytes of a word. A low-order byte containing modifier bits can be shifted across one or more non-active bytes to be combined with the opcode. The concatenated combination can then be used as a displacement to be added to a base-address for the purpose of locating a specific microcode or emulation routine.

(2) Processing of large words in storage either as single word or as separate, independent smaller words or bytes, by what in effect are single or multiple-byte processors of different sizes sharing the same logic.

One disadvantage of CPUs designed to handle large words, 24 bits or greater, is that they are very inefficient with storage in handling small operands such as counters and integer constants. This disadvantage can be overcome by matching processor and storage space to the required size of the operands. For example, a single 32-bit word could simultaneously store two or more separate counts that could be incremented independently by setting appropriate slices to the NAB state.

Likewise, the smaller operands, which occupy less storage than a full word, can be individually multiplied, divided, shifted, or tested, without special unpacking and packing operation.

(3) Efficient organization of storage and interprocess communication. For example, suppose that in a four-slice system we find it convenient to divide a certain block of storage into 16-bit words such that the high-order 16 bits of each 32-bit storage location are acted on by a processor composed of the two high-order slices and the low-order sixteen bits are to be processed by the two low-order slices. This is made possible by alternately setting low-order and high-order slices to the NAB state. Furthermore, suppose that the results of one process are required as operand inputs to the other. This can be accomplished by a simple rotation or shift between the two processors. By appropriate settings of the NAB mode, either byte of one processor can be transferred directly to either byte position of the other.

Note that this basic scheme can be applied for other combinations of processors, such as four single-byte processors, or a three-byte processor in conjunction with single-byte processor.

(4) Multiple-byte shift and rotate in a single cycle can be accomplished by setting intermediate slices to the NAB state. While individual bytes are limited by the nature of the carry bus (8 bits) to a maximum of an 8-bit shift in one cycle, a byte or part of a byte in a low-order slice can be transferred directly to a high-order slice through one or more NAB slices. For many applications this can serve the purpose of a multiple byte shift in order to position a byte, or set of bits, into a desired location, as may be useful in aforementioned floating point or compiler type operations, or in packing byte-sized information, such as ASCII characters, into storage.

In multiple-slice operations that use less than the total number of slices available, the inactive slices must be controlled to act as Nonactive Bytes. The Nonactive Byte State of a slice causes it to act as a simple transmission link between the active slices. Input carry signals are switched directly to the output carry lines, bypassing the internal shift and ALU logic. Other effects of the Nonactive Byte state are inactivation of internal clock signals to prevent any change in the state of internal registers and inactivation of all outputs to external control and status lines used in common with other slices. The only effect of the Nonactive Bytes on the operations of active slices is the carry propagation delay produced by the necessity of passing through the Nonactive Byte receiver, driver, and switching circuits.

An essential characteristic of the NAB slice is that it must be able to transfer each input byte, intact, to the output bus to be stored back in its original location without disturbing the internal state of the slice. In other words, it must perform the equivalent of a NOP (No Operation) in that part of the storage word that corresponds to its position in the data path. At the same time, it must keep its internal state, resulting from previous operations as an active byte, unchanged, so that it can resume execution of the program in the stage existing at the time it entered the inactive mode. This is necessary to preserve its identity as a possible separate, independent processor that has been temporarily set in a suspended state.

The internal bypass switching logic is illustrated in Figure 3, which shows that signals received from the bidirectional carry but can be routed either to the arithmetic and shift logic or directly to the carry output terminals of a slice. The switch connections in the figure indicate that A and B are being treated as Nonactive Bytes, while C and D are Highest Active Bytes and Lowest Active Bytes, respectively. Since the bidirectional carry bus handles carries in either direction, left or right, the switching logic in the Nonactive Byte slices must be controlled to pass a carry signal either from left to right (x to y) or from right to left (y to x). The necessary gating is controlled by decoding the current instruction which is received in all slices, including Nonactive Bytes. The instruction register is the only internal register that can be loaded while in the Nonactive state. The purpose of loading the instruction register in the Nonactive Byte state is to supply the necessary shift direction information for controlling the shift carry transfer logic needed to propagate carries in either direction between active slices that are executing left or right shift operations.

The operation code in the instruction register is decoded to determine what instruction is in the process of being executed by the active bytes. This information, in conjunction with the NAB state indication supplied by the mode control lines, is sufficient to establish the required behavior of the eight shift bus lines as well as the ALU carry. For example, if an arithmetic operation is specified, the ALU carry is transferred directly from right to left, input to output, without passing through the ALU circuits. Likewise, the direction and type of shift carries are controlled by the decoded instruction. The NAB state acts to preserve the previous state of all internal registers except the instruction register and a possible buffer register used for temporary storage of the input byte, which is returned unchanged to main storage at the end of the processor cycle.

Stand-Alone Byte (SAB) slices are conditioned by the Slice Function Control lines to operate independently of the external carry bus and the Interslice Control bus, which is used by a Stand-Alone Byte only to send test result information to the processor control unit. Therefore, two or more slices can function simultaneously as Stand-Alone Bytes, executing the same instruction on different bytes of data. The only problem would be identifying the source of a test result signal since the Test Result Indicator (TRI) line can be activated by any active slice. This would not be a problem for instructions that do not depend on the line, i.e., any non-test type of instruction. If multiple stand-alone slice operations are needed, each slice can be provided with an individual test line connection to the processor control unit.

Solutions to two of the specific problems noted earlier have now been described, namely, individual slice function control dependent on slice position and a mechanism for handling arithmetic and shift carries between slices that permits flexible variable-width data path operations. The third problem is interslice communication. The extent of the need for efficient interslice communication as well as the solution can be best shown by using specific instructions as examples. A simple example is the Convert to Absolute Value (ABS) instruction which converts the two's complement operand in register A to its absolute value and presents the result to the Data Bus Out (BDO), figure 1. It also sets the Even and Zero status indicators in the S register to reflect the result. All active slices receive and execute the same instruction on different bytes of the operand. However, conditions or results or actions in one slice may affect the actions of other slices. For example, in the ABS instruction:

1. The sign bit of the operand, located in Highest Active Byte, determines whether the action of each slice is to be a subtraction of the contents of A from B with the output of B forced to zero, or a simple transfer of the original operand unchanged. The Test Result Indicator (TRI) line is used to convey this information to all slices.

2. The result is tested in Lowest Active Byte to determine whether it is even or odd. The corresponding status is set in Highest Active Byte. The necessary communication link is provided by the Even Test Indicator (ETI) line.

3. A single Zero Test Indicator (ZTI) line supplies the result of zero tests in all slices to set the zero status bit in Highest Active Byte. The Zero Test Indicator line is activated by each slice such that if any slice detects a non-zero result, Zero Test Indicator is forced to indicate non-zero, which is equivalent to a wired-ORing of the non-zero-result signals from each slice.

In the above example, the Test Result Indicator line was used to convey control information between slices. In test instructions, such as bit tests, comparison tests, and increment or decrement with a test for zero, the Test Result Indicator line is used to signal a true or false result indication to the processor control unit. In this case, also, the line may be activated by any slice depending on the location of the tested condition. In a test for zero, the Zero Test Indicator line conveys the aggregate result to the Highest Active Byte where it is output to the Test Result Indicator line.

Another use of the Test Result Indicator, Even Test Indicator, and Zero Test Indicator lines is as a path for encoded control information, generated by one or more slices to be used in controlling the actions of other slices. An example is found in the execution of the Multiply Step Instruction. The data flow component uses a known procedure which has been referred to in the literature as the "modified Booth's algorithm" as used in the IBM System/360. This algorithm requires only one multiply step for each two bits of the multiplier. This capability is implemented by means of the preshiftable right-shift input (16) to the ALU (12) in conjunction with conditional single or double shifting of the output are provided by the multiplex and shift circuits (14) and as controlled via the three encoded control lines (TRI, ETI, ZTI) according to the following truth table in which Q6 and Q7 are the two last significant bits of the Q register of the Lowest Active Byte and Q8 is a special status bit.

| Q6 | Q7 | Q8 | Action |
|----|----|----|--------|
| 0 | 0 | 0 | No arithmetic operation, shift 2 positions |
| 0 | 0 | 1 | Add A to B, and shift 2 positions |
| 0 | 1 | 0 | Add A to B, and shift 2 positions |
| 0 | 1 | 1 | Pre-shift 1 position, add A to B, and post-shift 1 position |
| 1 | 0 | 0 | Pre-shift position, subtract A, and post-shift 1 position |
| 1 | 0 | 1 | Subtract A from B, and shift 2 positions |
| 1 | 1 | 0 | Subtract A from B, and shift 2 positions |
| 1 | 1 | 1 | No arithmetic operation, shift 2 positions |

The procedure starts with the multiplicand in the A register and the multiplier in the Q register. The product is developed in the B and Q registers by a sequence of conditional arithmetic (addition or subtraction) and shift operations. The conditions that govern the types of operations performed by each of sequence of identical multiply step instructions are supplied by the two least significant bits of the Q register, which are designated Q6 and Q7, of the Lowest Active Byte, and a special status bit, which acts as a low-end extension of the Q register during right-shift operations and is therefore referred to as Q8. During each multiply step the actions of all slices vary according to the above truth table.

At the end of each step the Q register is shifted right two positions and the two vacated most-significant-bit positions are filled by carries from the B register and ALU shift networks via lines in the carry bus. As previously indicated, the Q6 and Q7 variables of the truth table are located in the Lowest Active Byte. However, due to the convenience of having all special status information located in the same byte of the S register, Q8 is assigned to a bit of the S register in the Highest Active Byte. Due to the bidirectional nature of the interchip control lines, this presents no particular problem. Test Result Indicator, Even Test Indicator, and Zero Test Indicator are used, respectively to supply the state of Q6, Q7 and Q8 to all slices. Test Result Indicator and Even Test Indicator are activated by Q6 and Q7 in Lowest Byte, while Zero Test Indicator is activated by the Q8 indicator bit in the S register of Highest Active Byte. To provide the effect of shifting data from Q6 to Q8 in the shift operation, Test Result Indicator, representing the state of Q6, is simply gated to the input of the Q8 status indicator in Highest Active Byte. This is a further illustration of the flexibility provided by the interslice control lines.

One more example of the shared use of the interslice control lines is provided by the Divide Step Instruction. Each instruction cycle executes one step of a nonrestoring division algorithm by using interslice control lines as follows:

A conditional addition or subtraction is performed by every slice depending on the state of the negative indicator set in Highest Active Byte as a result of the preceding step. The state of the indicator is conveyed via Test Result Indicator.

The Least Significant Bit (LSB) of Q, located in Lowest Active Byte, is set according to the sign of the result of the current operation, addition or substraction.

The state of the sign bit is transferred from Highest Active Byte to Lowest Active Byte via Even Test indicator.

Thus, a small number of lines can be made to serve the interslice control requirements of a large variety of commands or instructions. Heretofore, the number of pins required for interconnects between slices has been a limiting factor in the performance and functional diversity that can be achieved in an LSI design.

**Claims**

1. Multiple data flow component system having a processor control unit (27) for processing microinstructions and generating instruction signals on an instruction bus (4), a data bus structure (1, 2) for ths transfer of data, a control memory (26) to supply the microinstructions to said processor control unit (27) and a plurality of data-flow components (30—33) which can be stand-alone, active or non-active state each of one comprising: an arithmetic and logic unit (12) for performing arithmetic operations, a pair of operand registers (8, 9), slice function control lines (5) for determining the state of said component and in particular its stand-alone, active or nonactive state, a test and control logic unit (17) connected to the slice function control lines (5) for providing control and test signals pertaining to said data flow component, a carry bypass bus (18) controlled by said test and control logic (17) for providing direct path for carries between a low end (7) and a high end (6) of said carry bus (18), an instruction register (3) connected to said test and control logic unit (17) and to said instruction bus (4) for receiving the current instruction from said bus (4), whereby the operation code of said instruction is decoded to determine in conjunction with the information provided by said function control lines (5), the state of the data flow component, the contents of said instruction being executed by said component if it is in active state said system being characterized in that for each data flow component said carry bus (18) is bidirectional, and in that when said data flow component is in non-active state as determined by the slice function control lines (5) and controlled by the test and control logic unit (17); the decoded operation code supplies the necessary shift direction information for controlling said test and control logic unit (17) in order to propagate carries in either direction between active adjacent components.

2. System according to claim 1 wherein said carry bus (18) is used to transfer shift and arithmetic carry information;

a function control bus (42) including a separate set of encoded control lines interconnected to each component to determine the state of each component in accordance with the following states:

NAB—Nonactive Byte
LB—Lowest Active Byte (Least Significant)
HB—Highest Active Byte (Most Significant)
CB—Central Active Byte (Between LB and HB, any position)
SAB—Stand-Alone Byte;

a plurality of data buses (43) each of said data flow components serving a predetermined portion or "slice" of each data bus and the number of "slices" determining the total width of the data bus

3. System according to claim 1 or claim 2 wherein a control bus (44) interconnects said components to provide communication between components for control purposes, and also to convey test result information from individual components to said processor control unit (27), each line of said control bus acting as a "wired-OR" connection between said components so that it can be activated by any component and so that its state can be sensed by any component or by said processor control unit (27) whereby a small number of lines serves the control requirements of a large variety of commands or instructions.

4. System according to claim 3, wherein said processor control unit (27) varies the signals on said function control bus (44) in response to special microinstructions from said control memory (26) to establish a variety of operational modes including at least one of the following modes:

(1) Combined operation of all data flow components (30—33) to perform operations on complete operands and to supply complete results to the output data bus (2) which can be gated to internal registers within said individual components or to an external destination;

(2) Stand-Alone operation of any selected component wherein said selected component operates on a single byte of data in the same fashion as a data flow element of an 8-bit processor, being totally independent of the state of any other component and in which mode external carry, control and status signals lines from other component are ignored and

(3) Subset operation wherein any subset of the components can be operated as a combination to serve as a processor acting on any selected subset of components, inactive components being controlled to act on data as nonactive bytes.

5. System according to claim 3 or claim 4 wherein said control bus (44) comprises three lines designated as follows:

TRI—Test Result Indicator,
ETI—Even Test Indicator,
ZTI—Zero Test Indicator,

the designations of said lines being indicative of particular individual functions for which they are used in the majority of the cases, and said lines further being used as a group to convey encoded control information as well as separately to transmit other special control signals unrelated to the designated named functions.

6. System to claim 5, wherein efficient communication is established, and said Test Result Indicator line interconnects said components (30—33) to convey control information between them, and further comprising:

means operable in test instructions, such as bit tests, comparison tests, and increment or decrement with a test for zero for controlling the Test Result Indicator line for use to signal a true or false result indication to the processor control unit and wherein the Test Result Indicator line is activated by any components depending on the location of the tested condition;

means operable in a test for zero for controlling said Zero Test Indicator line to convey the aggregate result to the Highest Active Byte where it is outputted to said Test Result Indicator line; and

means for controlling said Test Result Indicator, Even Test Indicator and Zero Test Indicator lines as a path for encoded control information, generated by one or more components to be used in controlling the actions of other components in accordance with a selected control algorithm.

7. System according to claim 6 wherein said components (30—33) execute the instruction received in their respective instruction register (3), on different bytes of the operand, wherein the conditions or results of actions in one component may affect the actions of other components, and wherein the respective Test Result Indicator, Even Test Indicator, and Zero Test Indicator lines convey selected information to the components.

**Patentansprüche**

1. System mit mehrfachen Datenflussbauteilen mit einer Verarbeitungssteuereinheit (27) für die Verarbeitung von Mikroanweisungen und Erzeugung von Anweisungssignalen auf einem Anweisungsbus (4), einer Datenbusstruktur (1, 2) für die Datenübertragung, einem Steuerspeicher (26) für die Abgabe von Mikroanweisungen an die besagte Prozessorsteuereinheit (27) und einer Mehrzahl von Datenflussbauteilen (30—33), welche einzeln aktiv oder nicht aktiv sein können, und von denen jede enthält: eine arithmetische und logische Einheit (12) für die Durchführung von Rechenvorgängen, ein Paar Operandenregister (8, 9), Scheibenfunktionssteuerzeilen (5) für die Ermittlung des Zustands des besagten Bauteils und insbesondere seines Zustands einzeln, aktiv oder nicht aktiv, eine logische Test- und Steuereinheit (17), angeschlossen an die Scheibenfunktionssteuerzeilen (5) für die Ermittlung des Zustands des besagten Bauteils, und insbesondere des Zustands einzeln, aktiv oder nicht aktiv, einer logischen Test- und Steuereinheit (17), verbunden mit den Scheibenfunktionssteuerzeilen (5) für die Bereitstellung von Steuer- und Test-signalen in Bezug auf das besagte Datenflussbauteil, einem Bypassträgerbus (18), der durch besagte Test- und Steuerlogik (17) gesteuert wird, um einen direkten Zugangsweg für Übertragungen zwischen einem unteren Ende (7) und einem oberen Ende (6) des besagten Übertragungsbus (18) bereitzustellen; gekennzeichnet dadurch, dass für jedes Datenflussbauteil der besagte Trägerbus (18) in zwei Richtungen durchlaufen wird, ein Anweisungsregister (3) an die besagte logische Test- und Steuereinheit (17) und an den besagten Anweisungsbus (4) angeschlossen ist, um die laufende Anweisung von besagtem Bus (4) zu erhalten, wodurch der Betriebscode der besagten Anweisung dekodiert wird, um in Verbindung mit der von den besagten Funktionssteuerzeilen (5) gelieferten Informations den Zustand des Datenflussbauteils und den Inhalt der besagten Anweisung zu bestimmen, die vom besagten Bauteil ausgeführt wird, wenn es sich im aktiven Zustand befindet (und wobei sich das besagte Datenflussbauteil im nichtaktiven Zustand befindet, wenn dies durch die Scheibenfunktionssteuerzeilen (5) vorgegeben und durch die logische Test- und Steuereinheit (17) gesteuert wird), wobei der decodierte Betriebscode die notwendige Schiebeinformation für die Steuerung der besagten logischen Test- und Steuereinheit (17) liefert, um den Transport in beliebiger Richtung zwischen anliegenden aktiven Bauteilen zu bewirken.

2. System gemäss Anspruch 1, worin der besagte Trägerbus (18) verwendet wird, um die Information von Verschiebungen und Rechenvorgängen zu übertragen; ein Funktionssteuerbus (42) mit einem getrennten Satz von codierten Steuerzeilen, angeschlossen an jedes Bauteil, um den Zustand eines jeden Bauteils in Übereinstimmung mit folgenden Zuständen zu ermitteln:

NAB—nicht aktives Byte
LB—niedrigstes aktives Byte (mit dem geringsten Gewicht)
HB—höchstes aktives Byte (mit dem grössten Gewicht)
CB—mittleres aktives Byte (zwischen LB und HB, beliebige Position)
SAB—alleinstehendes Byte;

eine Mehrzahl Datenbusse (43) wobei jedes Bauteil der besagten Datenflussbauteile einen vorgegebenen Abschnitt oder "Scheibe" eines jeden Datenbus versorgt und die Zahl der Scheiben die Gesamtbreite des Datenbus bestimmt.

3. System gemäss Anspruch 1 oder 2, in dem ein Steuerbus (44) besagte Bauteile miteinander zu Steuerzwecken verbindet, und auch um Testergebnisinformationen von den einzelnen Bauteilen zur besagten Prozessorsteuereinheit (27) zu leiten, wobei jede Linie des besagten Steuerbus als Oder-Verbindung zwischen den besagten Bauteilen wirkt, sodass sie durch jeden Bauteil aktiviert werden kann und dass ihr Zustand von jedem Bauteil oder von der besagten Prozessorsteuereinheit (27) abgegriffen werden kann, wodurch eine kleine Anzahl Zeilen die Steueranforderungen einer grossen Anzahl Befehle oder Anweisungen erfüllt.

4. System gemäss Anspruch 3, in dem die besagte Prozessorsteuereinheit (27) das Signal auf dem besagten Funktionssteuerbus (44) verändert, in Antwort auf besondere Mikroanweisungen vom besagtem Steuerspeicher (26), um eine Mehrzahl von Betriebsarten einzurichten, die mindestens eine der folgenden Betriebsarten enthalten:

(1) Kombinierter Betrieb aller Datenflussbauteile (30—33), um Vorgänge an kompletten Operanden durchzuführen und um komplette Ergebnisse an den Ausgabedatenbus (2) zu leiten, die innerhalb der besagten Einzelbauteile in die internen Register geleitet oder einer externen Bestimmung zugeführt werden können;

(2) Einzelbetrieb eines jeden ausgewählten Bauteils, worin das besagte Bauteil an einem einzelnen Datenbyte in der gleichen Weise wie ein Datenflussbauteil eines 8 Bit-Prozessors arbeitet, unter vollständiger Unabhängigkeit des Zustandes eines jeden anderen Bauteils, und in dem die externe Betriebsart Beförderung, Steuerung und Statussignalzeilen von anderen Bauteilen unbeachtet bleiben, und

(3) Teilbetrieb, in dem eine beliebiger Teil der Bauteile betätigt werden kann, als Kombination, um einen Prozessor zu versorgen, der in jedem ausgewählten Teil der Bauteile tätig ist, wobei unaktive Bauteile gesteuert werden können, um auf Daten als nichtaktive Bytes zu wirken.

5. System gemäss Anspruch 3 der 4, in dem der besagte Steuerbus (44) drei Zeilen enthält, die wie folgt bezeichnet werden;

TRI—Test Result Indicator—Testergebnisanzeige,
ETI—Even Test Indicator—Anzeige Testergebnis gerade,
ZTI—Zero Test Indicator—Anzeige Testergebnis Null.

Die Bezeichnungen der besagten Zeilen geben besondere individuelle Funktionen an, für die sie in der Mehrheit der Fälle verwendet werden, und die besagten Zeilen werden ausserdem als Gruppe verwendet, um codierte Kontrollinformationen weiterzuleiten, aber auch um getrennt andere besondere Kontrollsignale ohne Bezug auf die namentlich bezeichneten Funktionen zu übertragen.

6. System gemäss Anspruch 5, in dem eine wirksame Kommunikation erstellt wird, und die besagte Testergebnisanzeigezeile die besagten Bauteil (30—33) miteinander verbindet, um zwischen ihnen Kontrollinformationen weiterzuleiten, und ausserdem enthält:

Mittel, die in Testanweisungen verwendet werden können, wie Bit Tests, Vergleichstest, Inkremente oder Dekremente, mit einem Nulltest für die Überprüfung der Testergebnisanzeigezeile, um die Prozessorsteuereinheit auf wahre oder flasche Ergebnisanzeigen aufmerksam zu machen, und worin die Testergebnisanzeigezeile durch alle Bauteile aktiviert wird, die von der Anordnung der geprüften Bedingung abhängig sind.

Mittel, die einem Nulltest verwendet werden können, um die besagte Nulltestanzeigezeile zu steuern, um das Gesamtergebnis zum höchsten aktiven Byte weiterzuleiten, wo es an die besagte Testergebnisanzeigezeile ausgegeben wird, und

Mittel für die Steuerung der besagten Testergebnisanzeige, der geraden Testanzeige und der Nulltestanzeigezeile als Weg für codierte Steuerinformation, generiert durch ein oder mehrere Bauteile, die für die Steuerung der Wirkungen anderer Bauteile in Übereinstimmung mit einem ausgewählten Steueralgorithmus verwendet werden.

7. System gemäss Anspruch 6, in dem die besagten Bauteile (30—33) die empfangene Anweisung in ihrem jeweiligen Anweisungregister (3) ausführen, auf verschiedenen Bytes des Operanden, worin die Bedingungen oder Ergebnisse von Handlungen in einem Bauteil der Handlungen anderer Bauteile beeinflussen können, und worin die jeweiligen Testergebnisanzeigen, Anzeige Ergebnis gerade bzw. Null, ausgewählte Informationen an die Bauteile leiten.

**Revendications**

1. Système de composants multiples de traitement de données comportant une unité de commande de processeur (27) pour traiter des microinstructions et engendrer des signaux représentant des instructions sur un bus d'instructions (4), des bus de données (1, 2) pour le transfert de données, une mémoire de commande (26) pour fournir les microinstructions à ladite unité de commande de processeur (27) et une pluralité de composants de traitement de données (30 à 33) dont chacun peut être indépendant, actif ou inactif et comprend: une unité arithmétique et logique (12) pour effectuer des opérations arithmétiques, une paire de registres d'opérandes (8, 9), des lignes (5) de commande de fonction de composant pour déterminer l'état de celui-ci et en particulier son état indépendant, actif ou inactif, une unité logique de test et de commande (17) connectée auxdites lignes de commande (5) pour fournir des signaux de test et de commande afférents audit composant, un bus d'évitement de report (18) commandé par ladite unité logique de test et de commande (17) et constituant un chemin direct d'acheminement des reports entre les deux extrémités (6, 7) dudit bus de report (18), un registre d'instructions (3) connecté à ladite unité logique (17) et audit bus d'instructions (4) pour recevoir de ce dernier l'instruction en cours, si bien que le code opération de ladite instruction est décodé afin de déterminer, en conjonction avec l'information fournie par lesdites lignes (5) de commande de fonction l'état du composant de traitement de données, ladite instruction étant exécutée par ledit composant s'il se trouve dans l'état actif.

ledit système étant caractérisé en ce que, pour chaque composant de traitement de données, ledit bus de report (18) est bidirectionnel, et en ce que, lorsque ledit composant est dans l'état inactif, cela étant déterminé par lesdites lignes (5) de commande de fonction et contrôlé par ladite unité logique (17), le code opération décode fournit les informations de changement de direction nécessaires pour commander ladite unité logique (17) afin que les reports soient transmis dans une direction ou dans l'autre entre les composants actifs.

2. Système selon la revendication 1, caractérisé en ce que ledit bus de report (18) est employé pour transférer des informations afférentes à des décalages et à des reports arithmétiques, et comprend:

un bus de commande de fonction (42) comprenant un ensemble distinct de lignes véhiculant des commande codées et connectées à chaque composent pour déterminer l'état de celui-ci, selon les octets suivants:

NAB—Octet "état inactif"
LB—Octet "état actif" le moins significatif
HB—Octet "état actif" le plus significatif
CB—Octet "état actif" central (position quelconque entre LB et HB)
SAB—Octet "état indépendant",

une pluralité de bus de données (43),
chacun desdits composants de traitement de données étant associé à une partie prédéterminée de chaque bus de données et le nombre desdits parties déterminant la largeur total dudit bus.

3. Système selon la revendication 1 ou 2, caractérisé en ce qu'un bus de commande (44) interconnecte lesdits composants afin d'établir entre eux une communication à des fins de contrôle, et de transmettre des informations représentant des résultats d'essais à ladite unité de commande de processeur (27) depuis les différents composants, chacune des lignes dudit bus de commande faisant fonction de port OU câblée entre lesdits composants, de telle sorte qu'elle puisse être excitée par un composant quelconque et que son état puisse être détecté par un composant quelconque ou par ladite unité de commande de processeur (27), un petit nombre de lignes étant en conséquence utilisé pour les besoins de l'exécution de commandes et d'instructions très diverses.

4. Système selon la revendication 3, caractérisé en ce que ladite unité de commande de processeur (27) fait varier les signaux présents sur ledit bus de commande de fonction (44) en réponse à des microinstructions spéciales émanant de ladite mémoire de commande (26) afin d'établir différents modes de fonctionnement, dont au moins l'une des modes suivants:

(1) Mode "combiné", dans lequel tous les composants de traitement de données (30 à 33) sont utilisés afin d'exécuter des opérations sur des opérandes complets et d'appliquer les résultats complets obtenus au bus de sortie de données (2) aux fins de leur transfert aux registres internes des différents composants ou de leur acheminement vers une destination externe;
(2) Mode "indépendant", dans lequel un composant choisi agit sur un unique octet de données de la même façon qu'un composant de traitement de données dans un processeur d'octets, est totalement indépendant de l'état des autres composants et ne tient aucun compte des signaux externes de report, de commande et d'état provenant d'autres composants; et
(3) Mode "sous-ensemble", dans lequel tout sous-ensemble de composants peut être employé pour faire fonction de processeur par rapport à tout autre sous-ensemble choisi de composants, les composants inactifs étant commandés de manière à agir sur les données en tant qu'octets inactifs.

5. Système selon la revendication 3 ou 4, caractérisé en ce que ledit bus de commande (44) comporte trois lignes désignées comme suit:

—Indicateur de résultat de test (TRI)
—Indicateur de test de parté (ETI)
—Indicateur de test zéro (ZTI),

ces désignations correspondant à des fonctions individuelles particulières aus fins desquelles ces lignes sont utilisées dans la majorité des cas, lesdites lignes étant par ailleurs employées soit en tant que groupe pour véhiculer des informations de commande codées, soit séparément pour véhiculer des signaux de commande spéciaux sans rapport avec les fonctions désignées.

6. Système selon la revendication 5, caractérisé en ce qu'un communication efficace est établie et en ce que ladite ligne "Indicateur de résultat de test" interconnecte lesdits composants (30 à 33) afin que des informations de commande puissent être transférées entre ces derniers, et comprenant en outre:

des moyens utilisables dans des instructions de test, telles que tests de bits, tests de comparaison, et incrémentation ou décrémentation avec test de zéro, pour agir sur la ligne "indicateur de résultat de test" afin d'indiquer à l'unité de commande de processeur si les résultats sont vrais ou faux, ladite ligne étant excitée par n'importe quel composant en fonction de l'emplacement de la condition testée;

des moyens utilisables dans un test de zéro pour agir sur ladite ligne "Indicateur de résultat de test" afin de transférer le résultat global à l'octet actif le plus significatif où il est appliqué à ladit ligne; et

des moyens pour agir sur lesdites lignes "Indicateur de résultat de test", "Indicateur de test de parité" et "Indicateur de test zéro" de telle sorte qu'elles constituent une voie d'acheminement des informations de commande codées, engendrées par un ou plusieurs composants et devant servir à commander les activités d'autres composants conformément à un algorithme de commande choisi.

7. Système selon la revendication 6, caractérisé en ce que lesdits composants (30 à 33) exécutent les instructions reçues par leurs registres d'instructions (3) respectifs sur différents octets de l'opérande, en ce que les conditions ou les résultats d'activités afférents à un composant donné peuvent affecter les activités d'autres

21 0 042 967 22

composants, et en ce que les lignes "Indicateurs de résultat de test", "Indicateur de test de parité" et "Indicateur de test zéro" transmettent des informations choisies aux composants.

FIG. 2B

FIG. 3